# FASCICULE DE BREVET EUROPEEN

(11) **EP 0 881 654 B1**
(45) Date de publication et mention de la délivrance du brevet: **04.08.2004**
(21) Numéro de dépôt: 98410061.0
(22) Date de dépôt: 26.05.1998
(51) Int. Cl.: H01H 85/30

(54) **Fusible électrique**
Elektrische Sicherung
Electric fuse

(30) Priorité: 27.05.1997 FR 9706715
(43) Date de publication de la demande: 02.12.1998
(73) Titulaire: Schneider Electric Industries SAS, 92500 Rueil-Malmaison (FR)
(72) Inventeur: Rodriguez, Pascale, 38050 Grenoble Cedex 09 (FR); Mallet, Laurent, 38050 Grenoble Cedex 09 (FR)
(74) Mandataire: Ritzenthaler, Jacques

(56) Documents cités:
- EP-A- 0 155 373
- EP-A- 0 170 186
- DE-U- 29 605 370
- FR-A- 1 461 736
- US-A- 2 376 789
- PATENT ABSTRACTS OF JAPAN vol. 017, no. 152 (E-1340), 25 mars 1993 & JP 04 319223 A (MITSUBISHI ELECTRIC CORP), 10 novembre 1992
- PATENT ABSTRACTS OF JAPAN vol. 015, no. 036 (E-1027), 29 janvier 1991 & JP 02 273434 A (HOKURIKU ELECTRIC IND CO LTD), 7 novembre 1990

## Description

L'invention concerne un fusible électrique destiné notamment à être associé à un appareil électrique tel un interrupteur et comprenant un élément fusible placé dans un circuit électrique et apte à couper le courant en fondant lorsque l'intensité dépasse un seuil prédéterminé et un moyen de détection de l'état dégradé dudit fusible, ledit moyen comprenant une tige destinée à signaler le dysfonctionnement du fusible et un moyen de retenue comportant un élément à mémoire de forme apte à retenir ladite tige dans une position de repos pendant le fonctionnement normal du fusible et à se déformer de manière à libérer ladite tige lors de l'apparition d'un échauffement anormal à l'intérieur du fusible afin de signaler l'état dégradé du fusible.

On sait en effet que lorsqu'un fusible est à l'état dégradé, il se produit un échauffement excessif à l'intérieur de la cartouche pendant le passage du courant nominal. Il est donc nécessaire de détecter un tel échauffement, cette détection devant entraîner le remplacement du fusible.

On connaît un dispositif du genre précédemment mentionné tel que décrit dans le document JP 4.319.223, permettant de détecter à la fois la fusion et la dégradation du fusible grâce à un dispositif de détection monté en parallèle avec l'élément fusible. Ce dispositif de détection comprend un fil conducteur relié par l'une de ses extrémités à un embout du fusible et par son extrémité opposée à la tige de commande d'un dispositif d'affichage, ladite tige étant rappelée élastiquement vers l'extérieur de l'enveloppe lors d'un dysfonctionnement. Le fil conducteur comprend une partie fusible qui fond lorsque l'intensité du courant dépasse un seuil prédéterminé, et une partie en alliage à mémoire de forme susceptible d'être déformée sous l'effet de la chaleur générée par la dégradation du fusible. L'élément à mémoire de forme présente ainsi une forme contractée à l'état froid et une forme étirée, entraînant le déplacement de la tige, lorsque le fusible est dans un état dégradé. Or, pendant le fonctionnement normal du fusible, l'élément à mémoire de forme est sollicité dans le sens de sa déformation, d'où il résulte un fonctionnement peu fiable à moyen terme. En outre, dans ce dispositif, le système à mémoire de forme n'est pas irréversible en ce sens qu'il ne conduit pas forcément au remplacement du fusible.

La présente invention résout ces problèmes et propose un fusible électrique permettant la détection de l'état dégradé de la cartouche fusible de manière simple et fiable.

A cet effet, la présente invention a pour objet un fusible du genre précédemment mentionné, caractérisé en ce que ledit élément à mémoire de forme comprend une pièce sensiblement en forme de U à l'état de repos, comprenant une base et deux ailes, au moins l'une desdites ailes comportant à son extrémité libre, une patte d'accrochage sur ladite tige coopérant avec ladite tige de manière que la déformation de l'élément à mémoire de forme suite à un échauffement anormal à l'intérieur du fusible s'effectue suivant une direction sensiblement perpendiculaire à la direction de la force de traction exercée par le moyen de retenue à l'encomtre d'un ressort sur la tige.

On voit ainsi que grâce à ces caractéristiques, l'élément à mémoire de forme n'est pas sollicité dans le sens de sa déformation, c'est à dire, dans le sens de l'ouverture des contacts de l'appareil auquel il est associé, d'où il résulte un fonctionnement plus fiable. En outre, le système est irréversible, puisque la détection d'un échauffement entraîne le mécanisme dans une position irréversible nécessitant le remplacement de la cartouche.

Selon une réalisation particulière, les deux ailes précitées de la pièce en U présentent respectivement, à leur extrémité libre, deux pattes d'accrochage s'étendant en formant un angle supérieur ou égal à 90°, par rapport à la direction de la force précitée, et coopèrant avec deux parties de forme complémentaire prévues à l'extrémité de ladite tige.

Avantageusement, les deux pattes précitées sont formées, par usinage, aux extrémités desdites ailes de la pièce en U.

Selon une autre réalisation de l'invention, l'une desdites ailes de la pièce en U, présente une patte s'étendant en formant un angle sensiblement égal à 90° par rapport à la direction de la force précitée, l'autre desdites ailes étant montée à coulissement à travers la partie d'extrémité de la tige parallèlement à ladite direction.

Selon une autre caractéristique, le moyen de retenue comporte un fil de retenu comportant une extrémité solidaire d'un embout du fusible et une extrémité reliée à ladite base de la pièce en U de manière à retenir la tige en position de repos.

Selon une autre caractéristique, le fil de retenu est monté en parallèle avec l'élément fusible et est réalisé en un matériau conducteur fusible de manière à fondre lorsque l'intensité du courant à travers l'élément fusible dépasse le seuil précité.

Avantageusement, la pièce en forme de U précitée est réalisée à base de cuivre.

Avantageusement, la température de déclenchement de l'élément à mémoire de forme est comprise entre 140° et 160°.
Selon une autre caractéristique, la tige précitée est destinée à commander l'ouverture des contacts de l'appareil.

Mais d'autres avantages et caractéristiques de l'invention apparaîtront mieux dans la description détaillée qui suit et se réfère aux dessins annexés donnés uniquement à titre d'exemple et dans lesquels :
La figure 1 illustre dans une vue en coupe axiale une cartouche fusible logeant un fusible conforme à une réalisation particulière de l'invention.
La figure 2 illustre dans une vue en coupe axiale, un mode particulier de réalisation du moyen de détection de l'invention, tel qu'illustré sur la figure 1, ledit élément à mémoire de forme étant dans un état correspondant à un fonctionnement normal du fusible.
La figure 3 illustre le même moyen de détection dans une position de l'élément à mémoire de forme correspondant à un état dégradé du fusible.
Les figures 4, 6 et 8 illustrent trois autres modes de réalisation du moyen de détection dans une position correspondant à un état normal du fusible.
Les figures 5, 7 et 9 illustrent ces mêmes modes de réalisation, dans une position du moyen de détection correspondant à un état dégradé du fusible.

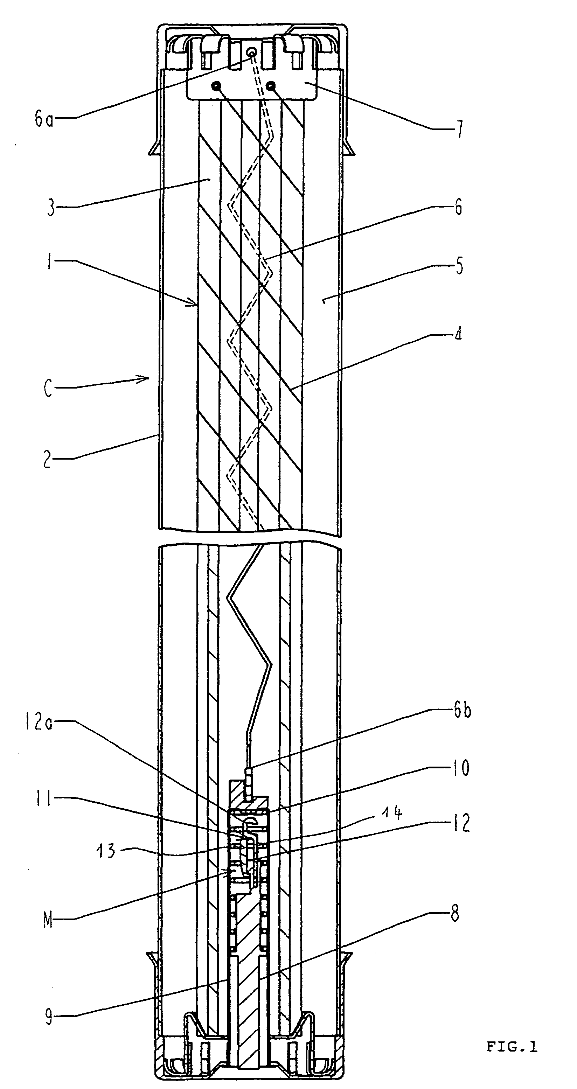

Sur la figure 1, on voit une cartouche fusible C destinée à être logée dans un puits fusible (non représenté) associé à un appareil électrique tel un interrupteur moyenne tension (non représenté). Cette cartouche C loge un fusible 1 (ou coupe-circuit) destiné à véhiculer le courant électrique entre un contact amont, par exemple une traversée, et le contact aval, par exemple une extrémité de câble, et à interrompre le circuit électrique lorsque l'intensité dépasse un seuil prédéterminé.

Cette cartouche-fusible C comprend de manière connue en soi, une enveloppe externe tubulaire 2 en matériau électriquement isolant, ladite enveloppe 2 renfermant un noyau interne tubulaire 3 en un matériau isolant réfractaire, servant de support à un élément fusible 4 avec interposition entre l'enveloppe 2 et le noyau 3 d'un espace annulaire 5 rempli de sable.

A l'intérieur du noyau 3 s'étend axialement un fil conducteur auxiliaire 6, notamment en tungstène, connecté électriquement en parallèle avec l'élément fusible 4.
L'une 6a des extrémités du fil 6 est fixée à un embout 7 du fusible 1 solidaire de l'enveloppe 2, tandis que l'autre extrémité 6b dudit fil 6 est reliée à un percuteur 8 monté coulissant dans un logement 9 du fusible 1 et susceptible de signaler la fusion de l'élément fusible 4 lorsque le courant circulant a dépassé un seuil prédéterminé. Ce percuteur 8 est destiné à agir sur une tige de commande (non représentée) montée coulissante à l'intérieur du bouchon du puits fusible (non représenté), et destinée à commander l'ouverture des contacts de l'interrupteur. Ainsi, ce fil 6 constitue un moyen de retenue du percuteur 8 en position de repos, à l'encontre d'un ressort 10 rappelant le percuteur 8 en position active en saillie à l'extérieur de l'enveloppe 2.
Selon les réalisations illustrées sur les figures, cette cartouche fusible C comprend un moyen de détection M de l'état dégradé de la cartouche fusible C, lequel moyen de détection M est associé au moyen de signalisation de la fusion de l'élément fusible 4 constitué par le fil de retenu 6 et le percuteur 8.

Ce moyen de détection M comprend ainsi le percuteur 8, le fil de retenu 6 du percuteur ainsi qu'un élément à mémoire de forme 11 interposé entre le percuteur 8 et le fil de tungstène 6.

Selon la réalisation illustrée sur les figures, cet élément à mémoire de forme 11 est constitué par une pièce en forme de U 12 dont les ailes 13, 14 s'étendent parallèlement à l'axe X du percuteur 8. Les deux ailes 13, 14 de la pièce en U 12 présentent respectivement deux extrémités 13a, 14a, coopérant avec l'une 8a des extrémités du percuteur 8 (ou tige de commande d'ouverture des contacts). Selon la réalisation illustrée sur les figures 1, 2 et 3, l'une 13a de ces deux extrémités comporte un élément d'accrochage ou patte 15 s'étendant perpendiculairement à l'axe X du percuteur 8 et auxdites ailes 13, 14 et s'accroche sur une partie étagée 8b formée à l'extrémité du percuteur 8. L'autre 14a de ces deux extrémités est montée à coulissement à travers cette même partie d'extrémité 8a du percuteur 8.

La pièce en U 12 en alliage à mémoire de forme, est reliée par sa base 12a, audit fil de tungstène 6 de manière que celui-ci retienne le percuteur 8 dans une position de repos dans laquelle ledit percuteur 8 se trouve totalement à l'intérieur du fusible 1.

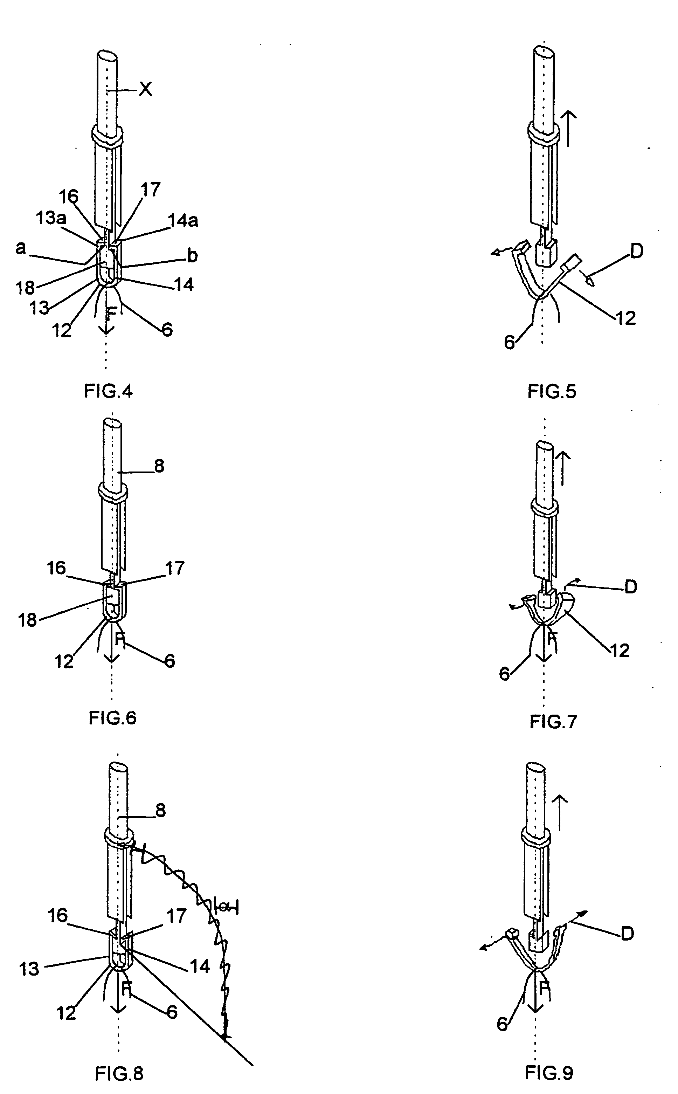

Selon la réalisation illustrée sur les figures 4 à 7, les deux extrémités 13a, 14a respectives des deux ailes 13, 14 de la pièce en U 12 comportent chacune une patte s'étendant suivant un angle de 90° par rapport à l'axe X du percuteur 8, ou à la direction de la force de traction F exercée sur le percuteur 8. Ces pattes de retenue 16, 17 s'accrochent sur une partie d'extrémité 18 en forme de T du percuteur 8 présentant deux faces parallèles a, b, destinées à recevoir lesdites pattes 16, 17.
Selon la réalisation illustrée sur les figures 8 et 9, les deux pattes de retenue 16, 17, s'étendent en formant un angle α, d'environ 130° par rapport à la direction de la force de traction F exercée sur le percuteur 8.

On décrira ci-après le fonctionnement du fusible selon les différentes réalisations en se reportant aux figures.

En fonctionnement normal, la cartouche C est traversée par le courant nominal et la tige de commande 8 est en position rentrée, retenue par la pièce en U 12 et le fil de tungstène 6.

Lorsque le courant dépasse un seuil prédéterminé, l'élément fusible 4 fond et le fil de tungstène 6 se rompt, ce qui entraîne la libération du percuteur 8. Le percuteur 8 entraîne alors la tige de commande du puits fusible vers l'extérieur afin de commander l'ouverture des contacts de l'interrupteur.

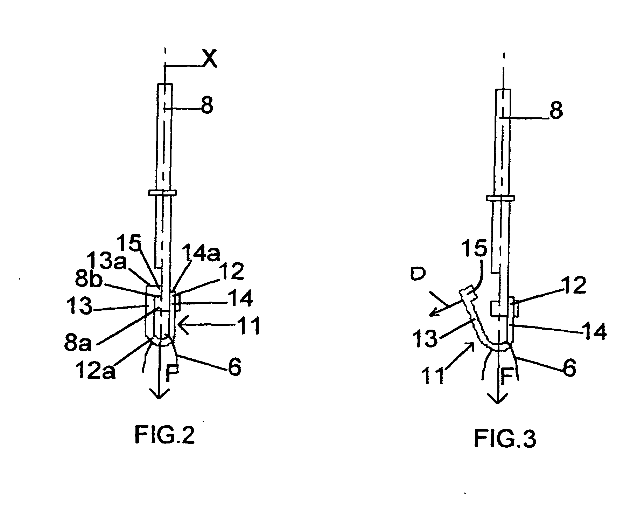

Lorsque la cartouche C est dans un état dégradé, un échauffement se produit à l'intérieur de la cartouche C. Lorsque la température de déclenchement de l'AMF (alliage à mémoire de forme) est atteinte, de préférence entre 140° et 160°C, la pièce AMF se déforme (fig. 3, 5, 7 et 9) et libère le percuteur 8 lequel est rappelé automatiquement grâce à la présence du ressort 10, vers l'extérieur du fusible 1 en position d'ouverture des contacts.

Selon la réalisation illustrée sur les figures 4 et 5, la pièce en AMF 12, lorsqu'elle se déforme est soumise à une sollicitation en flexion uniquement (fig. 5). Ce qui est le cas également pour les réalisations illustrées sur les figures 8 et 9.

Selon la réalisation illustrée sur les figures 6 et 7, cette même pièce 12 est soumise à une sollicitation combinée en flexion et torsion.

Dans tous les cas, la déformation de l'AMF s'effectue suivant une direction D sensiblement perpendiculaire à l'axe X du percuteur et à la force de traction F exercée par le fil de retenue 6. Ce système est un déclencheur ultime sans réarmement possible. Suite au déclenchement, la cartouche fusible doit être remplacée.

Bien entendu, l'invention n'est pas limitée aux modes de réalisation décrits et illustrés qui n'ont été donnés qu'à titre d'exemple.

## Revendications

1. Fusible électrique destiné notamment à être associé à un appareil électrique tel un interrupteur et comprenant un élément fusible (4) placé dans un circuit électrique et apte à couper le courant en fondant lorsque l'intensité dépasse un seuil prédéterminé et un moyen de détection de l'état dégradé dudit fusible, ledit moyen comprenant une tige (8) destinée à signaler le dysfonctionnement du fusible et un moyen de retenue (6) comportant un élément à mémoire de forme (11) apte à retenir ladite tige (8) dans une position de repos pendant le fonctionnement normal du fusible et à se déformer de manière à libérer ladite tige (8) lors de l'apparition d'un échauffement anormal à l'intérieur du fusible afin de signaler l'état dégradé du fusible, **caractérisé en ce que** ledit élément à mémoire de forme (11) comprend une pièce sensiblement en forme de U (12) à l'état de repos, comprenant une base (12a) et deux ailes (13, 14), au moins l'une (13) desdites ailes (13, 14) comportant à son extrémité libre (13a), une patte d'accrochage (15) sur ladite tige (8) coopérant avec ladite tige (8) de manière que la déformation de l'élément à mémoire de forme (11) suite à un échauffement anormal à l'intérieur du fusible s'effectue suivant une direction D sensiblement perpendiculaire à la direction de la force F de traction exercée par le moyen de retenue (6) à l'encontre d'un ressort (10) sur la tige (8).

2. Fusible électrique selon la revendication 1, **caractérisé en ce que** les deux ailes précitées (13, 14) de la pièce en U (12) présentent respectivement, à leur extrémité libre (13a, 14a), deux pattes d'accrochage (16, 17) s'étendant en formant un angle (α) supérieur ou égal à 90°, par rapport à la direction de la force (F) précitée, et coopèrant avec deux parties de formes complémentaires (a, b) prévues à l'extrémité (8a) de ladite tige (8).

3. Fusible électrique selon la revendication 2, **caractérisé en ce que** les deux pattes (16, 17) précitées sont formées, par usinage, aux extrémités (13a, 14a) desdites ailes (13, 14) de la pièce en U (12).

4. Fusible électrique selon la revendication 1, **caractérisé en ce que** l'une (13) desdites ailes (13, 14) de la pièce en U (12) présente une patte (15) s'étendant en formant un angle sensiblement égal à 90° par rapport à la direction de la force précitée (F) l'autre (14) desdites ailes (13, 14) étant montée à coulissement à travers la partie d'extrémité (8a) de la tige (8) parallèlement à ladite direction.

5. Fusible électrique selon l'une quelconque des revendications 1 à 4, **caractérisé en ce que** le moyen de retenue comporte un fil de retenu (6) comportant une extrémité (6a) solidaire d'un embout (7) du fusible (1) et une extrémité (6b) reliée à ladite base (12a) de la pièce en U (12) de manière à retenir la tige (8) en position de repos.

6. Fusible électrique selon la revendication 5, **caractérisé en ce que** le fil de retenu (6) est monté en parallèle avec l'élément fusible (4) et est réalisé en un matériau conducteur fusible de manière à fondre lorsque l'intensité du courant à travers l'élément fusible (4) dépasse le seuil précité.

7. Fusible électrique selon l'une quelconque des revendications précédentes, **caractérisé en ce que** la pièce en forme de U précitée (12) est réalisée à base de cuivre.

8. Fusible électrique selon l'une quelconque des revendications 1 à 7, **caractérisé en ce que** la température de déclenchement de l'élément à mémoire de forme (11) est comprise entre 140° et 160°.

9. Fusible électrique selon l'une quelconque des revendications précédentes, **caractérisé en ce que** la tige précitée (8) est destinée à commander l'ouverture des contacts de l'appareil.

## Claims

1. Electric fuse designed in particular to be associated with an electric apparatus such as a switch and comprising a fuse element (4) placed in an electric circuit and able to interrupt the current by melting when the intensity exceeds a preset threshold and a means for detecting the degraded state of said fuse, said means comprising a rod (8) designed to indicate malfunctioning of the fuse and a securing means (6) comprising a shape memory element (11) able to hold said rod (8) in a rest position during normal operation of the fuse and to deform so as to release said rod (8) when abnormal heating occurs inside the fuse to indicate the degraded state of the fuse, **characterized in that** said shape memory element (11) comprises a substantially U-shaped part (12) in the rest state, comprising a base (12a) and two wings (13, 14), at least one (13) of said wings (13, 14) comprising at its free end (13a) a latching lug (15) latching onto said rod (8) and co-operating with said rod (8) so that deformation of the shape memory element (11) following abnormal heating inside the fuse takes place in a direction D substantially perpendicular to the direction of the tractive force F exerted by the securing means (6) against a spring (10) on the rod (8).

2. Electric fuse according to claim 1, **characterized in that** the above-mentioned two wings (13, 14) of the U-shaped part (12) respectively present, at their free ends (13a, 14a), two latching lugs (16, 17) extending forming an angle (α) greater than or equal to 90° with respect to the direction of the above-mentioned force (F), and co-operating with two parts of complementary shapes (a, b) provided at the end (8a) of said rod (8).

3. Electric fuse according to claim 2, **characterized in that** the above-mentioned two lugs (16, 17) are formed by machining at the ends (13a, 14a) of said wings (13, 14) of the U-shaped part (12).

4. Electric fuse according to claim 1, **characterized in that** one (13) of said wings (13, 14) of the U-shaped part (12) presents a lug (15) extending forming an angle substantially equal to 90° with respect to the direction of the above-mentioned force (F), the other (14) of said wings (13, 14) being mounted sliding through the end part (8a) of the rod (8) parallel to said direction.

5. Electric fuse according to any one of the claims 1 to 4, **characterized in that** the securing means comprise a securing wire (6) comprising an end (6a) fixedly attached to an end (7) of the fuse (1) and an end (6b) connected to said base (12a) of the U-shaped part (12) so as to hold the rod (8) in the rest position.

6. Electric fuse according to claim 5, **characterized in that** the securing wire (6) is fitted in parallel with the fuse element (4) and is made of fusible conducting material so as to melt when the current intensity flowing through the fuse element (4) exceeds the above-mentioned threshold.

7. Electric fuse according to any one of the foregoing claims, **characterized in that** the above-mentioned U-shaped part (12) is made from a copper base.

8. Electric fuse according to any one of the claims 1 to 7, **characterized in that** the triggering temperature of the shape memory element (11) is comprised between 140° and 160°C.

9. Electric fuse according to any one of the foregoing claims, **characterized in** the above-mentioned rod (8) is designed to command opening of the contacts of the apparatus.

## Patentansprüche

1. Elektrische Schmelzsicherung, die insbesondere zur Kombination mit einem elektrischen Schaltgerät wie einem Lastschalter dient und einen Schmelzeinsatz (4), der in einen Stromkreis eingesetzt und in der Lage ist, den Strom durch Abschmelzen zu unterbrechen, wenn die Höhe des Stroms einen bestimmten Schwellwert überschreitet, sowie ein Detektionsmittel zur Erfassung eines Fehlerzustands der genannten Schmelzsicherung umfaßt, welches Mittel eine Stange (8) zur Anzeige der Funktionsstörung der Schmelzsicherung sowie ein Rückhaltemittel (6) mit einem Element mit Formgedächtnis (11) umfaßt, das in der Lage ist, die genannte Stange (8) im Normalbetrieb der Schmelzsicherung in einer Ruhestellung zu halten und sich bei Auftreten einer ungewöhnlichen Erwärmung im Innern der Schmelzsicherung derart zu verformen, daß es die genannte Stange (8) zur Anzeige des Fehlerzustands der Schmelzsicherung freigibt, **dadurch gekennzeichnet, daß** das genannte Element mit Formgedächtnis (11) ein im Ruhezustand annähernd U-förmiges Teil (12) mit einem Fußsteg (12a) und zwei Schenkeln (13, 14) umfaßt, wobei mindestens einer (13) der genannten Schenkel (13, 14) an seinem freistehenden Ende (13a) eine in Eingriff mit der genannten Stange (8) stehende Rastnase (15) aufweist, die derart mit der genannten Stange (8) zusammenwirkt, daß die Verformung des Elements mit. Formgedächtnis (11) als Folge einer ungewöhnlichen Erwärmung im Inneren der Schmelzsicherung längs einer Richtung D erfolgt, die annähernd senkrecht zur Richtung der vom Rückhaltemittel (6), entgegen der Wirkkraft einer Feder (10), auf die Stange (8) ausgeübten Zugkraft F verläuft.

2. Elektrische Schmelzsicherung nach Anspruch 1, **dadurch gekennzeichnet, daß** die beiden genannten Schenkel (13, 14) des U-Teils (12) an ihren freistehenden Enden (13a, 14a), jeweils eine Rastnase (16, 17) aufweisen, die in einem Winkel (α) größer oder gleich 90° in bezug zur Richtung der genannten Kraft (F) verlaufen und mit zwei, am Ende (8a) der genannten Stange (8) ausgebildeten, komplementär geformten Abschnitten (a, b) zusammenwirken.

3. Elektrische Schmelzsicherung nach Anspruch 2, **dadurch gekennzeichnet, daß** die beiden genannten Nasen (16, 17) direkt an die Enden (13a, 14a) der genannten Schenkel (13, 14) des U-Teils (12) angeformt sind.

4. Elektrische Schmelzsicherung nach Anspruch 1, **dadurch gekennzeichnet, daß** einer (13) der genannten Schenkel (13, 14) des U-Teils (12) eine Nase (15) aufweist, die in einem Winkel von annähernd 90° zur Richtung der genannten Kraft (F) verläuft und der andere (14) der beiden genannten Schenkel (13, 14) den Endabschnitt (8a) der Stange (8) durchragt und parallel zur genannten Richtung verschoben werden kann.

5. Elektrische Schmelzsicherung nach irgendeinem der Ansprüche 1 bis 4, **dadurch gekennzeichnet, daß** das Rückhaltemittel einen Rückhaltedraht (6) umfaßt, der ein mit einem Anschlußende (7) der Schmelzsicherung (1) verbundenes Ende (6a) sowie ein mit dem Fußsteg (12a) des U-Teils (12) verbundenes Ende (6b) aufweist, so daß die Stange (8) in der Ruhestellung zurückgehalten wird.

6. Elektrische Schmelzsicherung nach Anspruch 5, **dadurch gekennzeichnet, daß** der Rückhaltedraht (6) parallel zum Schmelzeinsatz (4) geschaltet ist und aus einem schmelzbaren Leiterwerkstoff besteht, so daß er durchschmilzt, wenn die Höhe des über den Schmelzeinsatz (4) fließenden Stroms den genannten Schwellwert überschreitet.

7. Schmelzsicherung nach irgendeinem der vorhergehenden Ansprüche, **dadurch gekennzeichnet, daß** das genannte U-Teil (12) aus einem Kupferwerkstoff besteht.

8. Schmelzsicherung nach irgendeinem der Ansprüche 1 bis 7, **dadurch gekennzeichnet, daß** die Ansprechtemperatur des Elements mit Formgedächtnis (11) zwischen 140 und 160° C liegt.

9. Schmelzsicherung nach irgendeinem der vorhergehenden Ansprüche, **dadurch gekennzeichnet, daß** die genannte Stange (8) dazu dient, die Abschaltung der Kontakte des Schaltgeräts zu steuern.
